# EUROPEAN PATENT SPECIFICATION

(11) **EP 4 676 716 B1**
(45) Date of publication and mention of the grant of the patent: **07.10.2026**
(21) Application number: 25723422.9
(22) Date of filing: 08.05.2025
(51) Int. Cl.: B29C 64/118, B29C 64/209, B29C 64/232, B29C 64/321, B33Y 10/00, B33Y 30/00

(54) **FILAMENT BUFFER**
FILAMENTPUFFER
TAMPON DE FILAMENT

(30) Priority: 10.05.2024 LU 103295
(43) Date of publication of application: 14.01.2026
(73) Proprietor: BigRep GmbH, 10961 Berlin (DE)
(72) Inventor: ZIMMERMANN, Martin, 10961 Berlin (DE)
(74) Representative: Paustian & Partner Patentanwälte mbB
(86) International application number: PCT/EP2025/062600
(87) International publication number: WO 2025/233442

(56) References cited:
- WO-A1-2021/060977
- US-A1- 2024 100 772

## Description

### FIELD

The present application relates to (build) material supply of a 3D-printer. In particular, the present application relates to an apparatus and a method to supply material to an hotend of a 3D-printer.

### BACKGROUND

In the field of additive manufacturing an additive manufacturing apparatus is also called a 3D-printer. In 3D-printing parts or workpieces are built/created/generated by subsequent depositing layers of build material onto each other. Each layer comprises at least one individual bead or strand of said build material). This build material may be any thermoplastic material, e.g. plastic material that is fed into the printer or a printhead in the feeding direction. Further the depositing process may be the FDM or FFF or FLM process or any other polymer melt dispensing process. The build material supplied to the 3D-printer may be -but not limited to- filament or granulated thermoplastic material. However, the present application is not limited to the aforementioned deposition processes but is applicable where technically feasible.

The 3D-printer usually comprises at least one printhead that moves in three directions along a printing trajectory or tool path. Also, there are 3D-printers that comprise a printhead that moves in two directions (commonly the X- and Y-direction or axis) and a printbed (the surface or structure on/to which the workpiece(s) are created) that moves in the third direction (commonly the Z-direction or axis). Further, there are printers where the printhead and the printbed move in at least one of X, Y and Z. Further, there are 3D-printers having at least one printhead attached to a robotic arm as they are known form industrial applications. The 3D-printer is controlled based on printing data determining the position where build material needs to be deposited to form a workpiece. The printing data for example comprise said printing trajectory or tool path. The build material is extruded or deposited with a certain speed, the so-called extrusion rate. Also, the build material is extruded at a certain temperature, the so-called extrusion temperature.

Said (build) material is supplied to the moveable printhead from a stationary part of the printer, especially if the material is in the form of filament. At least one filament spool is arranged on a stationary part of the printer and the filament is routed along a filament path by a flexible guide or connection to the movable printhead having a hotend to melt the filament and subsequently extrude the material and built/create/generate the workpiece to be built. The feeder in the 3D printhead has multiple wheels with teeth that grip the filament and provide the movement of the filament when they turn. The maximum force the feeder can exert on the filament is limited by the strength of the plastic filament and the geometry and/or pressure of the wheels. For the printing process force is needed to pull the filament from the spool and more important, force is needed to push the filament into the hotend of the 3D-printhead to guarantee a stable, constant printing process. The more force is needed to pull the filament from the spool, the less force is available to push the filament into the hotend of the 3D-printhead. At a certain point the feeder in the 3D-printhead has not enough force to push the correct and needed amount of filament into the extruder to have a sufficient extrusion of (build) material (molten filament) from the nozzle of the hotend/3D-printer.

### SUMMARY

If the filament path is long e.g. in large scale printers, the distances can become relatively long and therefor the friction in the filament path (e.g. the tubes) can increase up to point where it is difficult to have a stable, constant print process. The inconsistencies are also further increased by the fact that the filament guide path (tube) changes as the print head moves, thus resulting in unpredictable fluctuations of friction. This effect is a function not only of the path, but also the diameters of the filament and the tube and of material properties (e.g., soft vs. hard materials). Hence, there might be two filament feeding units (feeder) to transport the filament along the filament path. Usually there is a main feeder arranged in the vicinity of the hotend on the printhead. There are solutions where another feeding unit, a pre-feeder is arranged somewhere near the filament spool on a stationary part of the 3D-printer to support the feeder on the printhead if the filament path is too long and the friction of the filament along the filament path is too high for main the feeder to reliably and constantly provide filament to the hotend at a constant feed rate without e.g. slipping of said wheels.

However, both feeders may not be 100% equal in their feed rate and there might be a difference between the feeders regarding their feed rate. Due to this it is possible that the pre-feeder feeds more filament than the extruder needs for printing (and thus is fed by the main feeder) and the filament is squeezed into the filament path (e.g. flexible tube). Also, it is possible that the pre-feeder feeds too little filament. Regarding the print quality this case it is even worse because the main feeder has to pull the filament through the filament path and additionally from the pre-feeder. Both cases will reduce print quality or even damage the printed workpiece. A system having two different feeding units is for example shown in WO2021060977A1.

Also, there is the problem that if the printer as finished e.g. a layer and moves the printhead to another location to start printing there, that material might drip from the hotend/nozzle and deteriorate the print quality, this is called oozing. One reason for oozing is also the material (here filament) supply to the printhead or hotend.

It is the object of the present application to provide an apparatus and a method to increase the quality of workpieces printed by a 3D-printer. The object is solved by the subject matter of the independent claims. Selected embodiments are comprised in the dependent claims.

According to claim 1, a filament buffer comprises a housing, a flexible tube, a tube clamp and at least one reference element. The reference element is designed and arranged to be detected by a sensor. The tube clamp is slidably arranged in the housing between a first end stop and a second end stop. The tube clamp comprises a first end and a second end. The flexible tube reaches through the tube clamp from the second end to the first end. This may have the advantage that the filament is guided in the flexible tube all through the filament buffer. Further, the moving parts of the filament buffer cannot be polluted by abrasion from the filament. The flexible tube may be a PTFE tube or any other material having a low friction coefficient. The tube clamp is secured to the flexible tube in a given position. The first end stop may be closer to a nozzle of a 3D-printhead in an installed status of the filament buffer than the second end stop. In other words, the first end stop may be arranged downstream of the second end stop regarding the filament flow from the spool to the hotend.

According to another aspect of the present invention the flexible tube of the filament buffer reaches through the housing. This may have the advantage that the flexible tube provided guidance for the filament all throughout the filament buffer.

According to another aspect of the present invention the tube clamp of a filament buffer is torque proof arranged in the housing. This arrangement may be achieved for example with a force fit and/or a form fit and/or use of an adhesive. This may have the advantage that the filament buffer can work more reliable.

According to another aspect of the present invention the reference element of a filament buffer comprises at least one of a magnet, a limit stop, a coil, an inductively detectable structure, a capacitively detectable structure, an optically detectable structure. An optically detectable structure may be any structure (color, reflector, intensity, etc.) that can be detected by an optical sensor. This may have the advantage that the reference element of the filament buffer can be adapted to a design and/or requirement situation as needed and/or desired.

According to another aspect of the present invention the tube clamp of a filament buffer comprises at least two magnets as reference elements. The magnets are arranged distant from each other with opposed polarities. This may have the advantage that a simple and reliable form of detection of the position of the tube clamp can be achieved.

According to another aspect of the present invention the filament buffer further comprises a spring biasing the tube clamp towards one of the end stops. The spring may be any mechanical device that exerts a biasing force on the tube clamp, e.g. a coil spring, an elastomer spring, a tongue, etc. The spring may be arranged such that the tube clamp is biased towards the first end stop. This may have the advantage that the tube clamp is held in a defined position.

According to another aspect of the present invention a filament buffer further comprises at least part of a quick release mechanism on the housing. The part quick release mechanism may be for example the flexible tongues that fit in corresponding structures on a counterpart. This may have the advantage that it is possible to easily and removable integrate the filament in e.g. a 3D-printhead and replace the filament buffer and attached flexible tube easily as these are components subject to wear and need to be replaced from time to time.

According to an aspect of the present invention a 3D-printhead comprises a filament buffer according to any of the above aspects and further comprises a sensor detecting the reference elements. This may have the advantage that the filament buffer can be kept simple in design and no electrical interfaces between the filament buffer and the 3D-printhead need to be provided. Also, the filament buffer is kept simple in design and void of any complex electronic devices and issues of cable routing. Also, the filament buffer and attached flexible tube can be easily changed as these are components subject to wear and need to be replaced from time to time. Further, the costs for the exchange are kept low, as the sensor remains at the 3D-printhead.

According to an aspect of the present invention a 3D-printer comprises a filament buffer according to any of the above aspects and further comprising a main feeder, a pre-feeder and a 3D printhead. The main feeder is arranged at the printhead and the pre-feeder is arranged at a stationary part of the 3D-printer, preferably in the vicinity of a filament spool. The flexible tube extends between the printhead and the pre-feeder. The filament buffer is arranged at the 3D-printhead. The main feeder and the pre-feeder are controlled based on the position of the tube clamp detected by the sensor. This may have the advantage that the main feeder and the pre-feeder can be controller in their overall and individual feed rate and the correct amount of filament is provided to the hotend at any given time.

As recited in claim 10, a 3D-printing method comprises that a filament is retracted from a hotend of a 3D-printhead into a filament buffer according to any of the above aspects to prevent oozing. This may have the advantage that the print quality is increased.

In 3D-printing using filament, most of the time the filament and material is pressed in the direction of the workpiece. However, when the printing of one line or bead of material has finished, and the 3D-printhead has to move to another position (e.g. other side of the print bed), the nozzle is lifted to avoid contact with the already printed object. To avoid or reduce material dropping out of the nozzle, the main feeder pulls the filament backwards (against the usual feeding direction) and thus sucks in most of the material from the nozzle. These so called retraction moves are very short in distance the filament is retracted by the main feeder (e.g. 1-4 mm), very fast and depending on the print geometry can happen very often.

If the flexible tube would be directly fixed to the top of the 3D-printhear or hotend, all the filament backwards movements would go into the long flexible tube (filament path), resulting in high friction that may cause lost grip of the main feeder from the filament and a wrong position of the filament. Moreover, this alternating filament movement will increase wear of the tube and increase friction. The filament buffer can also be called a retraction module and will absorb most if not all (depending on the dimensions) of the fast filament retraction moves and guarantee a smooth dynamic print.

According to another aspect of the present invention a main feeder is controlled in a 3D-printing method to retract the filament into the filament buffer. This may have the advantage that molten material dropping (oozing) from the nozzle of the 3D-printhead can be avoided and the print quality increased.

A printer can have more than two printheads. The terms "first", "second" and so forth are ordinal numbers and serve purely to distinguish one feature from another. Also, mentioning only a first or second build material and or printhead does not imply that there cannot be more than two. This is true for all terms being indicated with ordinal numbers.

The scope of the invention is defined by the appended claims.

### BRIEF DESCRIPTION OF THE FIGURES

Further advantages and features of the present invention will be apparent from the appended figure. The figure is of merely informing purpose and not of limiting character. The figure schematically describes an embodiment of the present invention. Hence, the appended figures cannot be considered limiting for e.g. the dimensions of the present disclosure.
Fig. 1 depicts a schematic representation of a 3D-printer with only one feeder.
Fig. 2 depicts a similar schematic representation like fig. 1, however with another feeder.
Fig. 3 depicts a schematic representation of a filament buffer.
Fig. 4 depicts an exploded schematic representation of a 3D-printhead.

It is to be noted that in the different embodiments described herein same parts/elements are numbered with same reference signs, however, the disclosure in the detailed description may be applied to all parts/elements having the regarding reference signs. Also, the directional terms / position indicating terms chosen in this description like up, upper, down, lower downwards, lateral, sideward are referring to the directly described figure and may correspondingly be applied to the new position after a change in position or another depicted position in another figure. All figures are not to scale and no indication of proportions should be taken. Also is the placement of the first and second structures for explanation purposes only. The number of structures can be chosen at will.

### DETAILED DESCRIPTION OF THE EMBODIMENTS

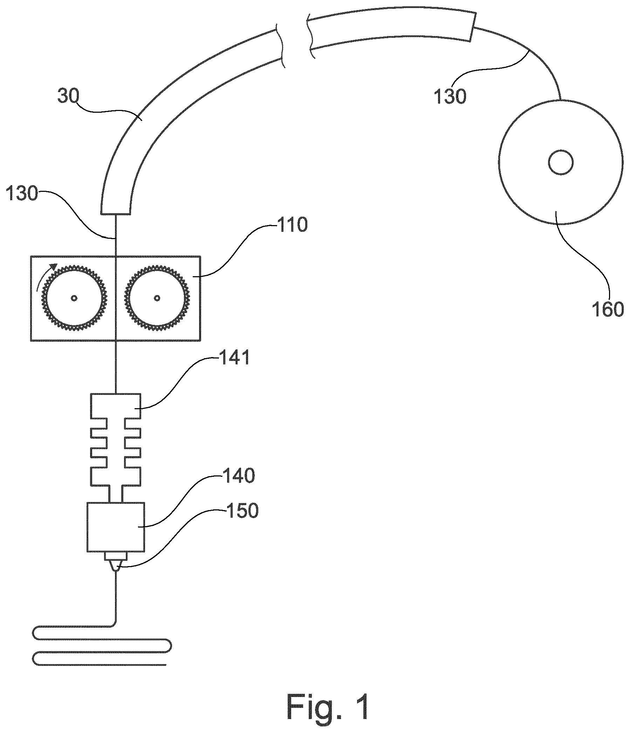

Initially referring to fig. 1 a schematic view of selected parts of a 3D-printer is depicted. A filament 130 is supplied from a filament spool 160 to a hotend 140 and extruded through a nozzle 150 as this is commonly known. Upstream of the hotend 150 there is a coldend 141. A main feeder 110 is feeding or pulling the filament by means of e.g. to toothed (or roughened) wheels from the filament spool and through a flexible tube 30 as this is commonly known.

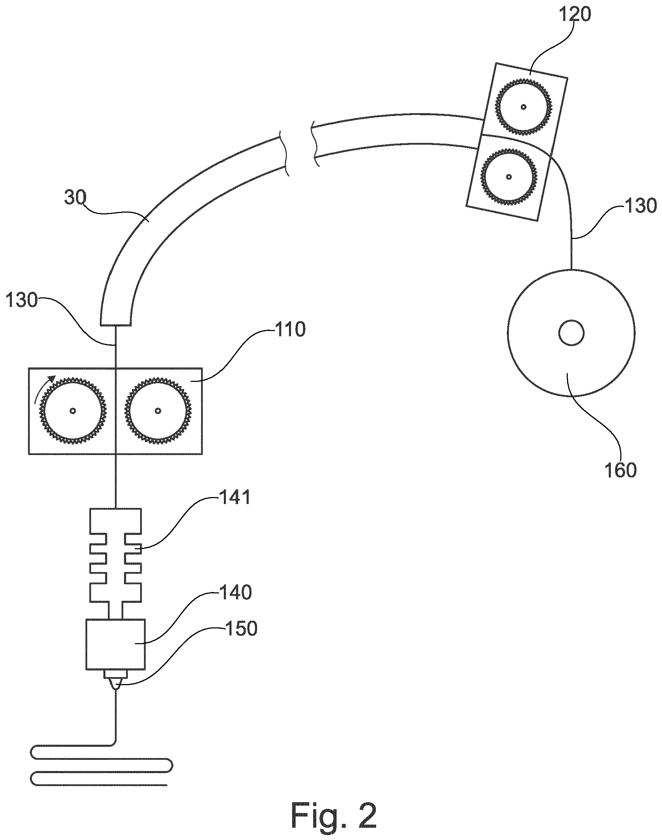

Fig. 2 is a similar schematic vie of selected parts of a 3D-printer to fig. 1. Further comprising a pre-feeder 120 feeding the filament 130 into the flexible tube. The main feeder 110 is in figs. 1 and 2 downstream (regarding the usual movement of the filament 130) of the flexible tube 30 and the pre-feeder 120 is upstream of the flexible tube 30.

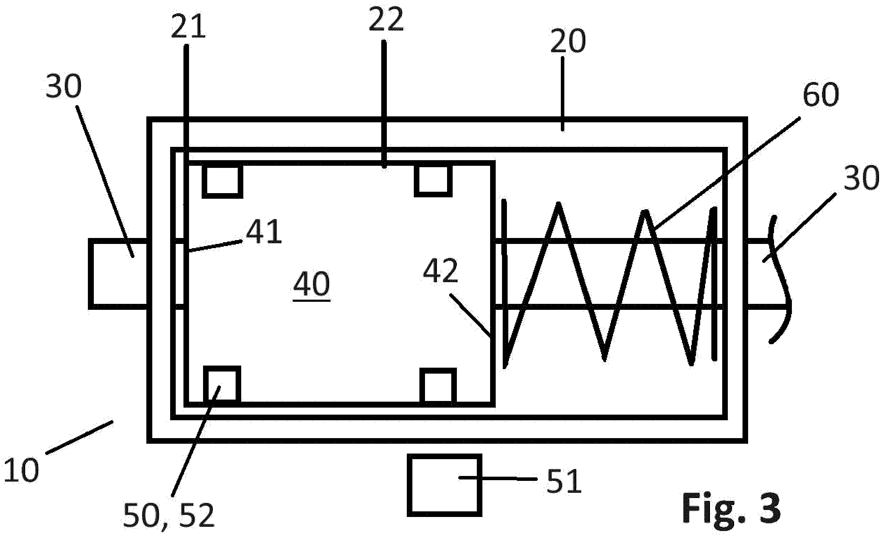

Fig. 3 shows a schematic view of a filament buffer 10. A tube clamp 40 is slidably arranged in the housing 20. A spring 60 pushes the tube clamp 40 into a first end stop 21. The way of travel of the tube clamp 40 within the housing in the direction in which the spring 60 is arranged determines the location of second end stop 22. The tube clamp 40 comprises four reference elements 50, here four magnets 52. The magnets 52 are arranged in pairs on opposite sides of the flexible tube 30 that passes through the tube clamp 40 and the housing 20. Said pairs of magnets 52 have the same polarity. In other words, the magnets 52 arranged closer to the first end stop 21 have the same polarity and the magnets arranged closer to the second end stop 22 also have the same polarity which is, however, different from the polarity of the pair of magnets 52 being arranged closer to the first end stop 21. A sensor 51 not being part of the filament buffer 10 but rather of the 3D-printhead the filament buffer 10 is meant to be attached to, detects the position of the magnets 52 in a known manner.

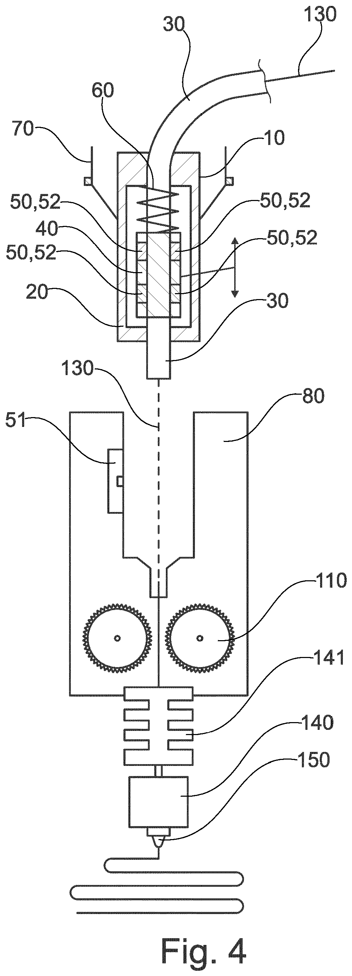

The filament buffer 10 and in particular the housing 20 may have at least part of a quick release mechanism 70 (not shown in fig. 3 but in fig. 4) that attaches the filament buffer 10 to a 3D-printhead that is not shown in fig. 3. In an installed status of the filament buffer 10 in a 3D-printhead the first end stop 21 is closer to a nozzle of the 3D-printhead (not shown). Hence, the flexible tube 30 ends on the side of the first end stop 21. The flexible tube 30 reaches through the tube clamp 40 from a second end 42 of the tube clamp 40 to a first end 41 of the tube clamp 40. In other words, the tube clamp 40 is fixed to the flexible tube 30 such that there is flexible tube 30 on both sides of the tube clamp 40.

Fig. 4 depicts an exploded schematic representation of a 3D-printhead. The filament buffer 10 depicted in fig. 3 is shown detached form the 3D-printhead 80. Here at least part of the quick release mechanism 70 designed and meant to attach the filament buffer 10 to the 3D-printhead 80 is shown. The filament 130 is depicted in a dashed line after exiting the filament buffer 10 on the side of the first end stop. The filament 130 is gripped by the wheels of the main feeder 110 and fed through a coldend 141 and into a hotend 140 and pushed out of a nozzle in a known way. On the top end of fig. 4 there is part of the flexible tube 30 containing the filament 130 shown. This continues on to a pre-feeder 120 and filament spool 160 as described in connection with fig. 2. Here, the sensor 51 of fig. 3 is depicted as being comprised by the 3D-printhead 80 that detects the position of the reference elements 50 (here magnets 52) when the filament buffer 10 is installed at the print head 80.

If the main feeder 110 reverses it's feed direction (usually the feed direction is to feed filament to the hotend 140), then the filament 130 is pushed from the bottom into the filament buffer 10 and moving the tube clamp 40 upwards in fig. 4 in direction of the second end stop 22 (fig. 3) compressing the spring 60. As described above, this results in a retraction of molten material (filament) from the nozzle 150 into the hotend 140 and thus preventing oozing or dripping of molten material from the nozzle 50.

In all figures like reference signs are used for like or similar parts/elements as in the other figures. Thus, a detailed explanation of such part/element will only be given once for the sake of brevity. Reference numbers like first and second, as in first detection trajectory and second detection trajectory are meant for distinguishing purposes only, as the order may be changed voluntarily.

The embodiments depict possible variations of carrying out the subject matter of the application, however, it is to be noted that the scope of the invention is defined by the appended claims.

The description and drawings, however, are to be considered when interpreting the claims. If an 3D-printer comprises more than two printheads then more structures being parallel to each other can be printed. Essentially each printhead prints its structure parallel to the structures of the other printheads. Also, the method is explained together with the description of the devices above. It is further to be noted that for a better understanding parts/elements are depicted to some extend not to scale and/or enlarged and/or down scaled. The feeder wheels are depicted not touching the filament for clarity reasons.

### List of reference signs

- 10: filament buffer
- 20: housing
- 21: first end stop
- 22: second end stop
- 30: flexible tube
- 40: clamp
- 41: first end
- 42: second end
- 50: reference element
- 51: sensor
- 52: magnet
- 60: spring
- 70: quick release mechanism
- 80: 3D-printhead
- 110: main feeder
- 120: pre-feeder
- 130: filament
- 140: hotend
- 141: coldend
- 150: nozzle
- 160: filament spool

## Claims

1. Filament buffer (10) comprising a housing (20), a flexible tube (30), a tube clamp (40) and at least one reference element (50), designed and arranged to be detected by a sensor (51), wherein the tube clamp is slidably arranged in the housing between a first end stop (21) and a second end stop (22), and wherein the tube clamp comprises a first end (41) and a second end (42), and **characterized in that** the flexible tube reaches through the tube clamp from the second end to the first end.

2. Filament buffer (10) according to claim 1, wherein the flexible tube (30) reaches through the housing (20).

3. Filament buffer (10) according to claim 1 or 2, wherein the tube clamp (40) is torque proof arranged in the housing (20).

4. Filament buffer (10) according to one of the previous claims, wherein the reference element (50) comprises at least one of a magnet, a limit stop, a coil, an inductively detectable structure, a capacitively detectable structure, an optically detectable structure.

5. Filament buffer (10) according to one of the previous claims, wherein the tube clamp (40) comprises at least two magnets (52) as reference elements (50), wherein the magnets are arranged distant from each other with opposed polarities.

6. Filament buffer (10) according to one of the previous claims, further comprising a spring (60) biasing the tube clamp (40) towards one of the end stops (21, 22).

7. Filament buffer (10) according to one of the previous claims, further comprising at least part of a quick release mechanism (70) on the housing (20).

8. 3D-printhead (80) comprising a filament buffer (10) according to any of the previous claims and further comprising a sensor (51) detecting the reference elements (50).

9. 3D-printer comprising a filament buffer (10) according to any of the previous claims and further comprising a main feeder (110), a pre-feeder (120) and a 3D printhead (80), wherein the main feeder is arranged at the printhead and the pre-feeder is arranged at a stationary part of the 3D-printer, and wherein the flexible tube (30) extends between the printhead and the pre-feeder, and wherein the main feeder and the pre-feeder are controlled based on the position of the tube clamp (40) detected by the sensor (51).

10. 3D-printing method wherein a filament (130) is retracted from a hotend (140) of a 3D-printhead (80) into a filament buffer (10) according to any of the previous claims to prevent oozing.

11. 3D-printing method according to claim 10, wherein a main feeder (110) is controlled to retract the filament (130) into the filament buffer (10).

## Patentansprüche

1. Filamentpuffer (10), umfassend ein Gehäuse (20), ein flexibles Rohr (30), eine Rohrklemme (40) und mindestens ein Referenzelement (50), das dafür ausgelegt und angeordnet ist, von einem Sensor (51) erfasst zu werden, wobei die Rohrklemme im Gehäuse zwischen einem ersten Endanschlag (21) und einem zweiten Endanschlag (22) verschiebbar angeordnet ist und wobei die Rohrklemme ein erstes Ende (41) und ein zweites Ende (42) umfasst, **dadurch gekennzeichnet, dass** das flexible Rohr vom zweiten Ende zum ersten Ende durch die Rohrklemme reicht.

2. Filamentpuffer (10) nach Anspruch 1, wobei das flexible Rohr (30) durch das Gehäuse (20) reicht.

3. Filamentpuffer (10) nach Anspruch 1 oder 2, wobei die Rohrklemme (40) verdrehsicher im Gehäuse (20) angeordnet ist.

4. Filamentpuffer (10) nach einem der vorhergehenden Ansprüche, wobei das Referenzelement (50) mindestens eines aus einem Magneten, einem Anschlag, einer Spule, einer induktiv erfassbaren Struktur, einer kapazitiv erfassbaren Struktur, einer optisch erfassbaren Struktur umfasst.

5. Filamentpuffer (10) nach einem der vorhergehenden Ansprüche, wobei die Rohrklemme (40) mindestens zwei Magnete (52) als Referenzelemente (50) umfasst, wobei die Magnete voneinander beabstandet mit entgegengesetzten Polaritäten angeordnet sind.

6. Filamentpuffer (10) nach einem der vorhergehenden Ansprüche, ferner umfassend eine Feder (60), die die Rohrklemme (40) zu einem der Endanschläge (21, 22) hin vorspannt.

7. Filamentpuffer (10) nach einem der vorhergehenden Ansprüche, ferner umfassend mindestens einen Teil eines Schnelllösemechanismus (70) am Gehäuse (20).

8. 3D-Druckkopf (80), umfassend einen Filamentpuffer (10) nach einem der vorhergehenden Ansprüche und ferner umfassend einen Sensor (51), der die Referenzelemente (50) erfasst.

9. 3D-Drucker, umfassend einen Filamentpuffer (10) nach einem der vorhergehenden Ansprüche und ferner umfassend einen Hauptförderer (110), einen Vorförderer (120) und einen 3D-Druckkopf (80), wobei der Hauptförderer am Druckkopf angeordnet ist und der Vorförderer an einem stationären Teil des 3D-Druckers angeordnet ist, und wobei sich das flexible Rohr (30) zwischen dem Druckkopf und dem Vorförderer erstreckt, und wobei der Hauptförderer und der Vorförderer basierend auf der vom Sensor (51) erfassten Position der Rohrklemme (40) gesteuert werden.

10. 3D-Druckverfahren, wobei ein Filament (130) aus einem Hotend (140) eines 3D-Druckkopfs (80) in einen Filamentpuffer (10) nach einem der vorhergehenden Ansprüche zurückgezogen wird, um Oozing (Nachtropfen) zu verhindern.

11. 3D-Druckverfahren nach Anspruch 10, wobei ein Hauptförderer (110) gesteuert wird, um das Filament (130) in den Filamentpuffer (10) zurückzuziehen.

## Revendications

1. Tampon de filament (10) comprenant un boîtier (20), un tube flexible (30), un pince-tube (40) et au moins un élément de référence (50), conçu et agencé pour être détecté par un capteur (51), dans lequel le pince-tube est agencé de manière coulissante dans le boîtier entre une première butée de fin de course (21) et une deuxième butée de fin de course (22), et dans lequel le pince-tube comprend une première extrémité (41) et une deuxième extrémité (42), **caractérisé en ce que** le tube flexible traverse le pince-tube de la deuxième extrémité à la première extrémité.

2. Tampon de filament (10) selon la revendication 1, dans lequel le tube flexible (30) traverse le boîtier (20).

3. Tampon de filament (10) selon la revendication 1 ou 2, dans lequel le pince-tube (40) est agencé de manière bloquée en rotation dans le boîtier (20).

4. Tampon de filament (10) selon l'une des revendications précédentes, dans lequel l'élément de référence (50) comprend au moins l'un parmi un aimant, une butée, une bobine, une structure détectable par induction, une structure détectable par capacité, une structure détectable de manière optique.

5. Tampon de filament (10) selon l'une des revendications précédentes, dans lequel le pince-tube (40) comprend au moins deux aimants (52) en tant qu'éléments de référence (50), les aimants étant agencés à distance l'un de l'autre avec des polarités opposées.

6. Tampon de filament (10) selon l'une des revendications précédentes, comprenant en outre un ressort (60) sollicitant le pince-tube (40) vers l'une des butées de fin de course (21, 22).

7. Tampon de filament (10) selon l'une des revendications précédentes, comprenant en outre au moins une partie d'un mécanisme de libération rapide (70) sur le boîtier (20).

8. Tête d'impression 3D (80) comprenant un tampon de filament (10) selon l'une quelconque des revendications précédentes et comprenant en outre un capteur (51) détectant les éléments de référence (50).

9. Imprimante 3D comprenant un tampon de filament (10) selon l'une quelconque des revendications précédentes et comprenant en outre un alimentateur principal (110), un pré-alimentateur (120) et une tête d'impression 3D (80), dans laquelle l'alimentateur principal est agencé au niveau de la tête d'impression et le pré-alimentateur est agencé au niveau d'une partie stationnaire de l'imprimante 3D, et dans laquelle le tube flexible (30) s'étend entre la tête d'impression et le pré-alimentateur, et dans laquelle l'alimentateur principal et le pré-alimentateur sont commandés sur la base de la position du pince-tube (40) détectée par le capteur (51).

10. Procédé d'impression 3D dans lequel un filament (130) est rétracté depuis un bloc chauffant (« hotend ») (140) d'une tête d'impression 3D (80) dans un tampon de filament (10) selon l'une quelconque des revendications précédentes pour empêcher le suintement (« oozing »).

11. Procédé d'impression 3D selon la revendication 10, dans lequel un alimentateur principal (110) est commandé pour rétracter le filament (130) dans le tampon de filament (10).
